# EUROPÄISCHE PATENTSCHRIFT

(11) **EP 3 629 007 B1**
(45) Veröffentlichungstag und Bekanntmachung des Hinweises auf die Patenterteilung: **11.08.2021**
(21) Anmeldenummer: 18196742.3
(22) Anmeldetag: 26.09.2018
(51) Int. Cl.: G01N 21/31, G01N 21/74, H05B 7/10

(54) **MANTELELEKTRODE**
JACKET ELECTRODE
ÉLECTRODE ENROBÉE

(43) Veröffentlichungstag der Anmeldung: 01.04.2020
(73) Patentinhaber: Schunk Kohlenstofftechnik GmbH, 35452 Heuchelheim (DE)
(72) Erfinder: GÄRTNER, Ralf, 35633 Lahnau (DE)
(74) Vertreter: advotec.

(56) Entgegenhaltungen:
- DE-A1-102015 220 994
- JP-A- S5 513 848
- JP-A- S58 140 625
- US-A- 4 432 643

## Beschreibung

Die Erfindung betrifft eine Mantelelektrode für eine Elektrodenvorrichtung eines Atomisierofens sowie ein Analysegerät mit einem Atomisierofen, insbesondere für die Atomabsorptions-Spektrometrie, wobei die Elektrodenvorrichtung aus der Mantelelektrode und einer Verschlusselektrode ausgebildet ist, wobei die Mantelelektrode und die Verschlusselektrode zur Aufnahme und elektrischen Kontaktierung einer Probenträgervorrichtung des Atomisierofens dienen, wobei die Mantelelektrode und die Verschlusselektrode an einer Haltevorrichtung des Atomisierofens halterbar und relativ zueinander positionierbar ausgebildet sind, wobei die Mantelelektrode eine Fensteröffnung aufweist, die mit einem zur Aufnahme eines Analyten dienenden Aufnahmerohr der Probeträgervorrichtung fluchtend in der Mantelelektrode ausgebildet ist, wobei die Fensteröffnung zwischen parallelen Seitenflächen der Mantelelektrode in der Mantelelektrode verlaufend ausgebildet ist, wobei die Mantelelektrode in ein Aufnahmelager der Haltevorrichtung einsetzbar ist, derart, dass die parallelen Seitenflächen an parallelen Aufnahmeflächen des Aufnahmelagers anliegen, wobei die Mantelelektrode eine Klemmeinrichtung zur Ausbildung einer auf die Aufnahmeflächen wirkenden Klemmkraft aufweist.

Atomisieröfen für die Atomabsorptions-Spektrometrie (AAS), insbesondere für die Graphit-Ofen-Atomabsorptions-Spektrometrie (GF-AAS), sind hinreichend bekannt, wobei zur Atomisierung eines Analyten ein Graphitofen bzw. ein Graphitrohr elektrothermisch aufgeheizt wird. Der Graphitofen bzw. der Atomisierofen weist regelmäßig eine Probenträgervorrichtung mit einem Aufnahmerohr auf, welches einen Aufnahmeraum ausbildet. Innerhalb des rohrförmigen Aufnahmeraums kann ein Analyt direkt im Aufnahmeraum oder auf einer beispielsweise schalenförmigen Plattform im Aufnahmeraum atomisiert werden. Zur optischen Spektralanalyse sind die Längsenden des rohrförmigen Aufnahmeraums stets offen ausgebildet. Der Aufnahmeraum bzw. das Aufnahmerohr kann längs oder quer beheizt sein. Das heißt, ein Strom zur Beheizung kann von Längsenden des Aufnahmerohrs über eine Länge des Aufnahmerohrs fließen oder das Aufnahmerohr kann über an seinem Mantel gegenüberliegenden Lagerfortsätzen elektrisch kontaktiert sein, sodass ein Strom quer zu einer Längsachse des Aufnahmerohrs durch dieses hindurchfließt. Die Lagerfortsätze sind dann an einer Elektrodenvorrichtung, bestehend aus einer Mantelelektrode und einer Verschlusselektrode, elektrisch kontaktiert. Die Probenträgervorrichtung wird im Wesentlichen in einem Aufnahmeraum der Mantelelektrode eingesetzt und lediglich an einem Lagerfortsatz über die Verschlusselektrode kontaktiert. Zur optischen Spektralanalyse sind in der Mantelelektrode Fensterbohrungen in Verlängerung des Aufnahmerohrs bzw. des Aufnahmeraums vorgesehen. Weiter wird über die Mantelelektrode der Probenträgervorrichtung ein Inertgas zugeführt.

Die Mantelelektrode ist in einem Aufnahmelager und die Verschlusselektrode in einem Deckellager einer Haltevorrichtung des Atomisierofens gehaltert. Das Deckellager ist oberhalb des Aufnahmelagers angeordnet und beispielsweise in Art eines Deckels über ein Scharnier bewegbar gehaltert, sodass der Aufnahmeraum geöffnet oder geschlossen werden kann. Zwischen dem Deckellager und dem Aufnahmelager sowie der Verschlusselektrode und der Mantelelektrode ist stets ein Spalt ausgebildet, um die elektrische Beheizung der Probenträgervorrichtung sicherzustellen. Ein derartiger Atomisierofen bzw. eine Mantelelektrode ist aus der DE 199 40 095 A1 bekannt.

Die im Wesentlichen quaderförmige Mantelelektrode weist parallele Seitenflächen auf und ist so in das Aufnahmelager eingesetzt, dass die parallelen Seitenflächen dichtend an parallelen Seitenflächen des Aufnahmelagers anliegen. So ist es dann auch möglich, über diese aneinander anliegenden Flächen und entsprechende verbindende Kanäle Inertgas zuzuführen. Nachteilig ist hier, dass eine besonders passgenaue Herstellung der Mantelelektrode erfolgen muss, da die Seitenflächen möglichst dicht an den Aufnahmeflächen anliegen sollen, um ein Ausströmen von Inertgas über einen eventuell vorhandenen Spalt zwischen den Flächen an dieser Stelle zu verhindern. Neben einem Verlust von Inertgas kann an einem derartigen Spalt auch Luftsauerstoff eindringen, welcher ein Messergebnis verfälschen kann. Gleichzeitig ist es jedoch erforderlich, die Mantelelektrode und das Aufnahmelager mit einer Spielpassung auszubilden, um überhaupt die Mantelelektrode in das Aufnahmelager einsetzen zu können. Wenn die Mantelelektrode beispielsweise aus Graphit und das Aufnahmelager aus Stahl ausgebildet sind, ist aufgrund der unterschiedlichen Wärmeausdehnungskoeffizienten die Ausbildung einer genauen Passung, die insbesondere auch bei einem Aufheizen möglichst gasdicht ist, schwierig. Weiter kommt hinzu, dass die Mantelelektrode und/oder das Aufnahmelager mit einer Oberflächenbeschichtung versehen sein können, was die Ausbildung einer entsprechenden Passung noch weiter erschwert. Vielfach kann dies zu fehlerhaften Chargen bei der Herstellung von Mantelelektroden oder auch zu einer erschwerten Handhabung von Mantelelektroden führen, wenn diese am Aufnahmelager ausgetauscht werden sollen und sich beispielsweise verklemmen.

Die US 4,432,643 A betrifft eine Elektrodenvorrichtung eines Atomisierofens. Dabei sind Elektroden einer Elektrodenvorrichtung des Atomisierofens an beiden Seiten einer Probenträgervorrichtung angeordnet, welche in Form einer Küvette ausgebildet ist, wobei dadurch eine längsseitige Beheizung einer Probe innerhalb der Probenträgervorrichtung erfolgt. Elektroden und Probenträgervorrichtung bestehen aus Graphit. Weiterhin ist eine der Elektroden auf einer Schiene verschiebbar gelagert und kann über eine Federvorrichtung in Richtung der Probenträgervorrichtung gedrückt werden.

Die JP S55-13848 A offenbart eine weitere Elektrodenvorrichtung für einen Atomisierofen, welche Elektroden aus Graphit aufweist, die an gegenüber liegenden Enden einer Probenträgervorrichtung angeordnet sind. Die Elektroden der Elektrodenvorrichtung weisen dabei jeweils einen distalen Elektrodenkörper sowie ein an der Probenträgervorrichtung anliegendes Graphitelement auf, wobei zwischen dem Elektrodenkörper und dem Graphitelement ein weiteres ringförmiges Graphitelement geklemmt werden kann.

Die JP S58-140625 A zeigt eine Elektrodenvorrichtung eines Atomisierofens, wobei Elektroden der Elektrodenvorrichtung beidseitig an einer röhrenförmigen Probenträgervorrichtung angeordnet sind, wobei Elektroden und Probenträgervorrichtung aus Graphit bestehen. Zudem ist an einer der Elektroden eine Federvorrichtung angeordnet, mittels der die Elektrode parallel zu einer Querachse der Elektrodenvorrichtung verschiebbar gelagert ist.

Die DE 10 2015 220994 A1 beschreibt die Verwendung einer pyrolytischen Kohlenstoffschicht auf der Oberfläche von Elektroden für elektrochemische Anwendungen, unter anderem zur Bindung von Metallionen aus Abwässern.

Der vorliegenden Erfindung liegt daher die Aufgabe zu Grunde, eine Mantelelektrode und ein Analysegerät vorzuschlagen, welche bzw. welches eine vereinfachte Herstellung der Mantelelektrode sowie eine einfache und gasdichte Montage gewährleistet.

Diese Aufgabe wird durch eine Mantelelektrode mit den Merkmalen des Anspruchs 1 und ein Analysegerät mit den Merkmalen des Anspruchs 15 gelöst.

Die erfindungsgemäße Mantelelektrode für eine Elektrodenvorrichtung eines Atomisierofens, insbesondere für die Atomabsorptions-Spektrometrie, bildet zusammen mit einer Verschlusselektrode eine Elektrodenvorrichtung aus, wobei die Mantelelektrode und die Verschlusselektrode zur Aufnahme und elektrischen Kontaktierung einer Probenträgervorrichtung des Atomisierofens dienen, wobei die Mantelelektrode und Verschlusselektrode an einer Haltevorrichtung des Atomisierofens halterbar und relativ zueinander positionierbar ausgebildet sind, wobei die Mantelelektrode eine Fensteröffnung aufweist, die mit einem zur Aufnahme eines Analyten dienenden Aufnahmerohr der Probenträgervorrichtung fluchtend in der Mantelelektrode ausgebildet ist, wobei die Fensteröffnung zwischen parallelen Seitenflächen an den Längsenden in der Mantelelektrode verlaufend ausgebildet ist, wobei die Mantelelektrode in ein Aufnahmelager der Haltevorrichtung einsetzbar ist, derart, dass die parallelen Seitenflächen an parallelen Aufnahmeflächen des Aufnahmelagers anliegen, wobei die Mantelelektrode eine Klemmeinrichtung zur Ausbildung einer auf die Aufnahmeflächen wirkenden Klemmkraft aufweist, wobei die Klemmeinrichtung durch einen Keil ausgebildet ist, der zumindest teilweise die eine Seitenfläche der beiden Seitenflächen ausbildet und an einer schiefen Ebene der Mantelelektrode anliegt, wobei der Keil zumindest abschnittsweise die Fensteröffnung ausbildet.

Durch die erfindungsgemäße Mantelelektrode wird es möglich, die parallelen Seitenflächen der Mantelelektrode dichtend an den parallelen Aufnahmeflächen des Aufnahmelagers zur Anlage gelangen zu lassen. So kann ein Austreten von Inertgas oder ein Eintritt von Luftsauerstoff verhindert werden. Gleichzeitig ist es nicht mehr erforderlich, eine besonders enge Spielpassung auszubilden, weshalb eine Herstellung der Mantelelektrode vereinfacht wird. Die Klemmeinrichtung kann jede Art von Einrichtung sein, die eine Ausbildung der Klemmkraft auf die parallelen Aufnahmeflächen durch die parallelen Seitenflächen ermöglicht. Die Klemmeinrichtung ist vorzugsweise so ausgebildet, dass die Klemmkraft bei Bedarf durch die Klemmeinrichtung ausgebildet werden kann. So ist es möglich, zunächst die Mantelelektrode mit einem ausreichenden Spiel zwischen Seitenflächen und Aufnahmeflächen in das Aufnahmelager einzusetzen und nachfolgend mittels der Klemmeinrichtung die Klemmkraft aufzubringen, wobei dann das Spiel zwischen den Seitenflächen und den Aufnahmeflächen beseitigt wird. So sind die parallelen Seitenflächen der Mantelelektrode mittels der Klemmeinrichtung in ihrem Relativabstand variabel einstellbar.

Erfindungsgemäß ist die Klemmeinrichtung durch einen Keil ausgebildet, der zumindest teilweise die Seitenfläche ausbildet, wobei der Keil an einer schiefen Ebene der Mantelelektrode anliegt. So weist die Mantelelektrode eine schiefe Ebene auf, an der der Keil anliegt, der dann seinerseits die Seitenfläche der Mantelelektrode ausbildet. Die Mantelelektrode kann dann besonders einfach in das Aufnahmelager eingesetzt werden, wobei nach einem Einsetzen der Mantelelektrode in das Aufnahmelager der Keil der Mantelelektrode eingeschoben werden kann. Der Keil bewirkt über die schiefe Ebene die Klemmkraft auf die Aufnahmeflächen des Aufnahmelagers, sodass die Mantelelektrode dicht an den Aufnahmeflächen anliegen kann. So ist auch nicht mehr die Ausbildung einer besonders genauen Passung erforderlich, da eine Länge der Mantelelektrode in Richtung der Längsachse über den Keil variiert werden kann. Die Mantelelektrode wird so auch insgesamt kostengünstiger herstell bar.

Die Mantelelektrode kann in das Aufnahmelager quer zu einer Längsachse der Mantelelektrode in die Haltevorrichtung einsetzbar ausgebildet sein. Die Mantelelektrode kann dann einfach in das Aufnahmelager hineingeschoben oder herausgezogen werden. Das Aufnahmelager kann eine Aufnahme für die Mantelelektrode in Form einer Nut mit den parallelen Aufnahmeflächen aufweisen.

Die Fensteröffnung kann entlang einer Längsachse der Mantelelektrode in der Mantelelektrode verlaufend und mit in dem Aufnahmelager ausgebildeten Fensterbohrungen fluchtend ausgebildet sein. Durch die Fensteröffnung in der Mantelelektrode ist es dann möglich, beispielsweise einen Laser auf einen Analyten in dem Aufnahmerohr zu richten. Die Fensteröffnungen müssen daher auch mit den Fensterbohrungen in dem Aufnahmelager fluchten, sodass der Laser durch das Aufnahmerohr, die Fensteröffnungen und die Fensterbohrungen hindurchgelangen kann. Auch ist es dann möglich, über die Fensteröffnung und die Fensterbohrungen ein Inertgas in das Aufnahmerohr einzuleiten. Das Inertgas kann dann von beiden Seiten des Aufnahmerohrs in dieses einströmen und über eine Abgasöffnung bzw. Aufnahmeöffnung im Aufnahmerohr, die auch zur Platzierung des Analyten im Aufnahmerohr dienen kann, aus diesem hinausströmen.

Der Keil kann mit einer Durchgangsöffnung, bevorzugt einem Langloch, ausgebildet sein, wobei die Durchgangsöffnung bzw. das Langloch dann mit der Fensteröffnung fluchtet. Die Fensteröffnung wird dann von dem Keil ausgespart. Gleichzeitig schließt der Keil dann einen eventuellen Spalt zwischen der Mantelelektrode und einer Aufnahmefläche des Aufnahmelagers dicht ab.

Demnach kann der Keil derart in einen Spalt zwischen der Aufnahmefläche des Aufnahmelagers in die schiefe Ebene einsetzbar sein, dass die Fensteröffnung gasdicht an einer mit der Fensteröffnung fluchtenden Fensterbohrung des Aufnahmelagers anliegt. Der Keil bildet somit zumindest abschnittsweise die Fensteröffnung aus. Auch kann verhindert werden, dass Inertgas zwischen den Seitenflächen und den Aufnahmeflächen herausströmt oder dass Sauerstoff der Umgebungsluft in die Fensteröffnung gelangen kann.

In der einen Seitenfläche der Mantelelektrode kann eine Nut bzw. Führung mit der schiefen Ebene ausgebildet sein. Wenn die schiefe Ebene in Art einer Nut ausgebildet ist, wird es möglich, ein seitliches Herausfallen des Keils bei einer Montage desselben zu verhindern. Darüber hinaus ist dann auch immer sichergestellt, dass der Keil relativ zu der Längsachse der Mantelelektrode bzw. der Fensteröffnung lagerichtig positioniert ist. Eine Breite der Nut kann im Wesentlichen einer Breite des Keils entsprechen.

Die Mantelelektrode kann an den beiden Längsenden eine Klemmeinrichtung aufweisen. Prinzipiell ist es möglich, dass die Mantelelektrode nur an einem Ende eine Klemmeinrichtung aufweist, jedoch ermöglicht die Ausbildung von Klemmeinrichtungen an den jeweiligen Längsenden auch eine besonders genaue Zentrierung an der Mantelelektrode relativ zu den Aufnahmeflächen des Aufnahmelagers.

Die Mantelelektrode kann eine Zuführöffnung aufweisen, die entlang einer Querachse der Mantelelektrode in der Mantelelektrode verlaufend mit einem in dem Aufnahmelager ausgebildeten Zuführkanal zur Zuführung von Inertgas fluchtend ausgebildet sein kann, wobei die Zuführöffnung in eine in der Mantelelektrode ausgebildete Aufnahmeöffnung zur Aufnahme der Probenträgervorrichtung münden kann. Über den Zuführkanal des Aufnahmelagers kann dann der Mantelelektrode in Richtung der Querachse das Inertgas zugeführt werden, wobei das Inertgas die Probenträgervorrichtung, wenn diese in die Mantelelektrode eingesetzt ist, umströmen kann. So ist auch sichergestellt, dass eine Umgebung der Probenträgervorrichtung bzw. deren Aufnahmeöffnung in der Mantelelektrode frei von Luftsauerstoff ist.

Die Zuführöffnung kann an einer die Seitenflächen verbindenden Unterseite der Mantelelektrode mit einer Muffe oder einem Nippel ausgebildet sein, die bzw. der mit einem übereinstimmend ausgebildeten Nippel oder einer Muffe des Zuführkanals des Aufnahmelagers verbunden werden kann. Über die Muffe oder den Nippel kann die Unterseite der Mantelelektrode dann auch dicht mit dem Zuführkanal des Aufnahmelagers verbunden werden, sodass kein Inertgas über diese Verbindung in unerwünschter Weise ausströmen oder Luftsauerstoff in die Zuführöffnung einströmen kann. Die Muffe kann beispielsweise anhand einer gesenkten Bohrung mit einem geraden Bohrungsgrund und der Nippel in Art eines übereinstimmend ausgebildeten zylinderförmigen Absatzes ausgebildet sein.

Die Muffe kann als ein entlang einer Längsachse der Mantelelektrode verlaufendes Langloch ausgebildet sein. So ist es dann auch möglich, eine eventuelle Verschiebung der Mantelelektrode in Richtung der Längsachse, die durch die Klemmeinrichtung durch das Aufbringen der Klemmkraft bewirkt werden kann, zu kompensieren. Der Nippel kann dann zumindest ein Stück weit in dem Langloch verschiebbar sein, sodass ein Klemmen des Nippels in der Muffe durch die Klemmkraft verhindert werden kann.

Die Mantelelektrode, die Verschlusselektrode und/oder die Probenträgervorrichtung können vorzugsweise vollständig aus Graphit ausgebildet sein. Demnach kann vorgesehen sein, dass auch ein Keil der Mantelelektrode aus Graphit ausgebildet ist. Eine Verunreinigung des Analyten durch andere Stoffe kann so vermieden werden.

Die Mantelelektrode, die Verschlusselektrode und/oder die Probenträgervorrichtung können mit pyrolytischem Kohlenstoff beschichtet sein.

Weiter kann das Aufnahmelager aus Metall ausgebildet sein und ebenfalls mit pyrolytischem Kohlenstoff beschichtet sein. Das Aufnahmelager ist so besonders robust und ein Reibwert zwischen den Seitenflächen und den Aufnahmeflächen herabgesetzt.

Die Probenträgervorrichtung kann ein Aufnahmerohr aufweisen, welches einen rohrförmigen Aufnahmeraum zur Aufnahme des Analyten ausbildet. Dabei kann vorgesehen sein, dass der Analyt lediglich in dem Aufnahmerohr platziert wird. Weiter kann in dem Aufnahmerohr auch eine sogenannte Plattform zur Aufnahme des Analyten platziert sein. Die Plattform kann Abstützvorsprünge aufweisen, die die Plattform von einer Wandung des Aufnahmerohrs beabstanden.

Das erfindungsgemäße Analysegerät, insbesondere für die Atomabsorptions-Spektrometrie, umfasst einen Atomisierofen, wobei der Atomisierofen eine Elektrodenvorrichtung mit einer Verschlusselektrode und eine erfindungsgemäße Mantelelektrode aufweist. Zu den Vorteilen des erfindungsgemäßen Analysegerätes wird auf die Vorteilsbeschreibung der erfindungsgemäßen Mantelelektrode verwiesen.

Das Analysegerät kann eine Probenträgervorrichtung und eine Haltevorrichtung zur Halterung und Relativpositionierung der Mantelelektrode und der Verschlusselektrode aufweisen. Die Haltevorrichtung kann dann aus einem Deckellager und einem Aufnahmelager ausgebildet sein. Die Probenträgervorrichtung kann zur Aufnahme eines Analyten ein Aufnahmerohr, welches einen Aufnahmeraum für den Analyten ausbildet, aufweisen.

Weitere vorteilhafte Ausführungsformen eines Analysegerätes ergeben sich aus den Merkmalsbeschreibungen der auf den Vorrichtungsanspruch 1 zurückbezogenen Unteransprüche.

Nachfolgend werden vorteilhafte Ausführungsformen der Erfindung unter Bezugnahme auf die beigefügten Zeichnungen näher erläutert.

Es zeigen:
- **Fig. 1**: Eine Schnittansicht eines Analysegerätes mit einer ersten Ausführungsform einer Mantelelektrode;
- **Fig. 2**: eine zweite Ausführungsform einer Mantelelektrode in einer perspektivischen Ansicht;
- **Fig. 3**: die Mantelelektrode aus **Fig. 2** in einer Explosionsdarstellung;
- **Fig. 4**: die Mantelelektrode aus **Fig. 2** in einer Draufsicht;
- **Fig. 5**: die Mantelelektrode aus **Fig. 2** in einer Unteransicht.

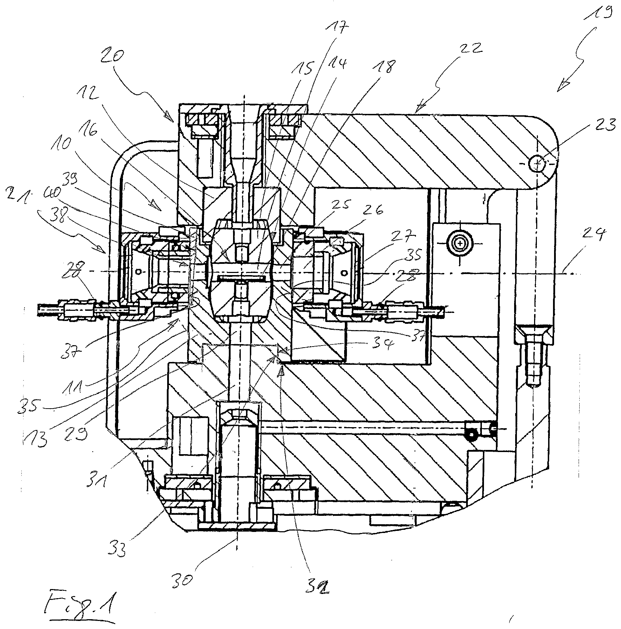

Die Figur 1 zeigt einen Längsschnitt durch einen Atomisierofen 10, wobei der Atomisierofen 10 eine Elektrodenvorrichtung 11 mit einer Verschlusselektrode 12 und einer Mantelelektrode 13 aufweist. In einer Aufnahmeöffnung 14 der Mantelelektrode 13 ist eine Probenträgervorrichtung 15 eingesetzt und mit der Verschlusselektrode 12 so kontaktiert, dass ein Strom über die Probenträgervorrichtung 15 fließen kann. Die Probenträgervorrichtung 15 weist ihrerseits ein Aufnahmerohr 16 mit einem Aufnahmeraum 17 und einer darin angeordneten Plattform 18 zur Aufnahme eines hier nicht dargestellten Analyten auf. Der Atomisierofen 10 ist Teil eines Analysegerätes 19, welches eine Haltevorrichtung 20 mit einem Aufnahmelager 21 zur Halterung der Mantelelektrode 13 und einem Deckellager 22 zur Halterung der Verschlusselektrode 12 umfasst. Das Deckellager 22 kann über ein Scharnier 23 verschwenkt und so die Verschlusselektrode 12 von der Probenträgervorrichtung 15 entfernt werden. Das Aufnahmerohr 16 verläuft entlang einer Längsachse 24 der Mantelelektrode 13, wobei in der Mantelelektrode 13 Fensteröffnungen 25 ausgebildet sind, die ihrerseits mit Fensterbohrungen 26 des Aufnahmelagers 21 fluchten. Die Fensterbohrungen 26 sind mit Fenstern 27 verschlossen, sodass ein hier nicht dargestellter Laserstrahl des Analysegerätes 19 entlang der Längsachse 24 verlaufen kann. An die Fensterbohrungen 26 sind jeweils Zuführkanäle 28 angeschlossen, über die Inertgas in die Fensterbohrungen 26 und damit in den Aufnahmeraum 17 eingeleitet werden kann.

Weiter weist die Mantelelektrode 13 eine Zuführöffnung 29 auf, die entlang einer Querachse 30 der Mantelelektrode 13 verläuft und mit einem in dem Aufnahmelager 21 ausgebildeten Zuführkanal 31 zur Zuführung von Inertgas in die Aufnahmeöffnung 14 fluchtet. An einer Unterseite 32 der Mantelelektrode 13 ist eine Muffe 33 ausgebildet, in die ein Nippel 34 in das Aufnahmelager 21 eingesetzt ist.

Parallele Seitenflächen 35 der Mantelelektrode 13 liegen dicht an parallelen Aufnahmeflächen 37 des Aufnahmelagers 21 an. Die Mantelelektrode 13 weist eine Klemmeinrichtung 38 auf, die aus einem Keil 39 in einer schiefen Ebene 40 ausgebildet ist. Durch Einsetzen des Keils 39 an der schiefen Ebene 40 ist es möglich, eine Klemmkraft der Seitenflächen 35 auf die Aufnahmeflächen 37 zu bewirken und so die Mantelelektrode 13 im Wesentlichen gasdicht an den Fensterbohrungen 26 an dem Aufnahmelager 21 anzuschließen.

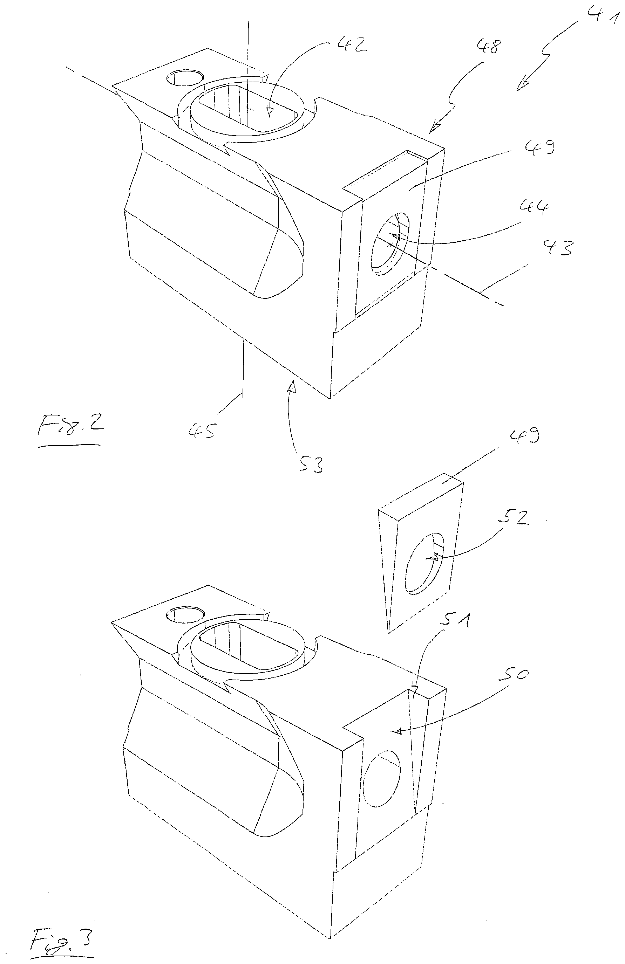

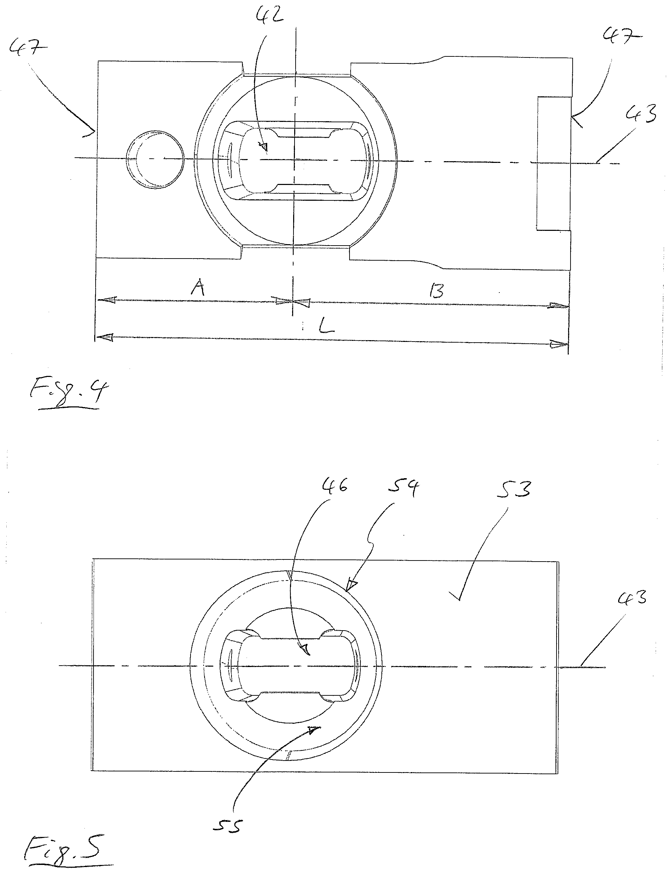

Eine Zusammenschau der **Fig. 2** bis **Fig. 5** zeigt eine Mantelelektrode 41 mit einer Aufnahmeöffnung 42 zur Aufnahme einer hier nicht dargestellten Probenträgervorrichtung. Entlang einer Längsachse 43 der Mantelelektrode 41 ist eine Fensteröffnung 44 ausgebildet. In Richtung einer Querachse 45 ist eine Zuführöffnung 46 ausgebildet und an die Aufnahmeöffnung 42 angeschlossen. Die Mantelelektrode 41 weist parallele Seitenflächen 47 zur Anlage einer hier nicht dargestellten Aufnahmefläche eines Aufnahmelagers auf, wobei an einer der Seitenflächen 47 eine Klemmeinrichtung 48 mit einem Keil 49 und einer schiefen Ebene 50 ausgebildet ist. Die Nut 51 führt so den Keil 49 an der schiefen Ebene 50. Weiter ist in dem Keil 49 ebenfalls die Fensteröffnung 44 in Form eines Langlochs 52 ausgebildet, sodass unabhängig von einer Position des Keils 49 die Fensteröffnung 44 nicht durch den Keil 49 verdeckt ist. Die Seitenflächen 47 sind relativ zueinander in einem Abstand bzw. einer Länge L ausgebildet, wobei die Länge L, je nach Position des Keils 49 in der schiefen Ebene 50, variabel ist. Eine Teillänge A der Länge L ist dabei stets konstant, wobei eine Teillänge B der Länge L variabel ist. An einer Unterseite 53 der Mantelelektrode 41 ist eine Muffe 54 ausgebildet, wobei die Muffe 54 die Form eines Langlochs 55 aufweist, welches in Richtung der Längsachse 43 orientiert ist. Eine Verschiebung der Muffe 54 relativ zu der Seitenfläche 47 mit der Klemmeinrichtung 48 führt dann nicht zum Klemmen eines hier nicht dargestellten Nippels, welcher in das Langloch 55 bzw. die Muffe 54 eingesetzt werden kann.

## Patentansprüche

1. Mantelelektrode (13, 41) für eine Elektrodenvorrichtung (11) eines Atomisierofens (10), insbesondere für die Atomabsorptions-Spektrometrie, wobei die Elektrodenvorrichtung aus der Mantelelektrode und einer Verschlusselektrode (12) ausgebildet ist, wobei die Mantelelektrode und die Verschlusselektrode zur Aufnahme und elektrischen Kontaktierung einer Probenträgervorrichtung (15) des Atomisierofens dienen, wobei die Mantelelektrode und die Verschlusselektrode an einer Haltevorrichtung (20) des Atomisierofens halterbar und relativ zueinander positionierbar ausgebildet sind, wobei die Mantelelektrode eine Fensteröffnung (25, 44) aufweist, die mit einem zur Aufnahme eines Analyten dienenden Aufnahmerohr (16) der Probenträgervorrichtung fluchtend in der Mantelelektrode ausgebildet ist, wobei die Fensteröffnung zwischen parallelen Seitenflächen (35, 47) an den Längsenden der Mantelelektrode in der Mantelelektrode verlaufend ausgebildet ist, wobei die Mantelelektrode in ein Aufnahmelager (21) der Haltevorrichtung einsetzbar ist, derart, dass die parallelen Seitenflächen an parallelen Aufnahmeflächen (37) des Aufnahmelagers anliegen, wobei die Mantelelektrode eine Klemmeinrichtung (38, 48) zur Ausbildung einer auf die Aufnahmeflächen wirkenden Klemmkraft aufweist,
**dadurch gekennzeichnet,**
**dass** die Klemmeinrichtung durch einen Keil (39, 49) ausgebildet ist der zumindest teilweise eine Seitenfläche der beiden Seitenflächen ausbildet und an einer schiefen Ebene (40, 50) der Mantelelektrode anliegt, wobei der Keil zumindest abschnittsweise die Fensteröffnung ausbildet.

2. Mantelelektrode nach Anspruch 1,
**dadurch gekennzeichnet,**
**dass** die Mantelelektrode (13, 41) in das Aufnahmelager (21) quer zu einer Längsachse (24, 43) der Mantelelektrode in die Haltevorrichtung (20) einsetzbar ausgebildet ist.

3. Mantelelektrode nach Anspruch 1 oder 2,
**dadurch gekennzeichnet,**
**dass** die Fensteröffnung (25, 44) entlang einer Längsachse (24, 43) der Mantelelektrode (13, 41) in der Mantelelektrode verlaufend und mit in dem Aufnahmelager (21) ausgebildeten Fensterbohrungen (26) fluchtend ausgebildet ist.

4. Mantelelektrode nach einem der vorangehenden Ansprüche,
**dadurch gekennzeichnet,**
**dass** der Keil (39, 49) mit einer Durchgangsöffnung, bevorzugt einem Langloch (52), ausgebildet ist, die mit der Fensteröffnung (25, 44) fluchtet.

5. Mantelelektrode nach einem der vorangehenden Ansprüche,
**dadurch gekennzeichnet,**
**dass** der Keil (39, 49) derart in einen Spalt zwischen der Aufnahmefläche (37) des Aufnahmelagers (21) und der schiefen Ebene (40, 50) einsetzbar ist, dass die Fensteröffnung (25, 44) gasdicht an einer mit der Fensteröffnung fluchtenden Fensterbohrung (26) des Aufnahmelagers anliegt.

6. Mantelelektrode nach einem der vorangehenden Ansprüche,
**dadurch gekennzeichnet,**
**dass** in der einen Seitenfläche (35, 47) der Mantelelektrode (13, 41) eine Nut (51) (Führung) mit der schiefen Ebene (40, 50) ausgebildet ist.

7. Mantelelektrode nach einem der vorangehenden Ansprüche,
**dadurch gekennzeichnet,**
**dass** die Mantelelektrode (13, 41) an den beiden Längsenden eine Klemmeinrichtung (38, 48) aufweist.

8. Mantelelektrode nach einem der vorangehenden Ansprüche,
**dadurch gekennzeichnet,**
**dass** die Mantelelektrode (13, 41) eine Zuführöffnung (29) aufweist, die entlang einer Querachse (30) der Mantelelektrode in der Mantelelektrode verlaufend mit einem in dem Aufnahmelager (21) ausgebildeten Zuführkanal (31) zur Zuführung von Inertgas fluchtend ausgebildet ist, wobei die Zuführöffnung in einer in der Mantelelektrode ausgebildeten Aufnahmeöffnung (14) zur Aufnahme der Probenträgervorrichtung (15) mündet.

9. Mantelelektrode nach Anspruch 8,
**dadurch gekennzeichnet,**
**dass** die Zuführöffnung (29) an einer Unterseite (32, 53) der Mantelelektrode (13, 41) mit einer Muffe (33, 54) oder einem Nippel ausgebildet ist, die bzw. der mit einem übereinstimmend ausgebildeten Nippel (34) oder einer Muffe des Zuführkanals (31) des Aufnahmelagers (21) verbindbar ist.

10. Mantelelektrode nach Anspruch 9,
**dadurch gekennzeichnet,**
**dass** die Muffe (34, 54) als ein entlang einer Längsachse (24, 43) der Mantelelektrode (13, 41) verlaufendes Langloch (55) ausgebildet ist.

11. Mantelelektrode nach einem der vorangehenden Ansprüche,
**dadurch gekennzeichnet,**
**dass** die Mantelelektrode (13, 41), die Verschlusselektrode (12) und/oder die Probenträgervorrichtung (15) aus Graphit ausgebildet sind.

12. Mantelelektrode nach einem der vorangehenden Ansprüche,
**dadurch gekennzeichnet,**
**dass** die Mantelelektrode (13, 41), die Verschlusselektrode (12) und/oder die Probenträgervorrichtung (15) mit pyrolytischem Kohlenstoffbeschichtet sind.

13. Mantelelektrode nach einem der vorangehenden Ansprüche,
**dadurch gekennzeichnet,**
**dass** das Aufnahmelager (21) aus Metall ausgebildet ist und mit pyrolytischem Kohlenstoff beschichtet ist.

14. Mantelelektrode nach einem der vorangehenden Ansprüche,
**dadurch gekennzeichnet,**
**dass** die Probenträgervorrichtung (15) ein Aufnahmerohr (16) aufweist, welches einen rohrförmigen Aufnahmeraum (17) zur Aufnahme des Analyten ausbildet.

15. Analysegerät (19), insbesondere für die Atomabsorptions-Spektrometrie, umfassend einen Atomisierofen (10),
**dadurch gekennzeichnet,**
**dass** der Atomisierofen eine Elektrodenvorrichtung (11) mit einer Verschlusselektrode (12) und einer Mantelelektrode (13, 41) nach einem der vorangehenden Ansprüche aufweist.

16. Analysegerät nach Anspruch 15,
**dadurch gekennzeichnet,**
**dass** das Analysegerät (19) eine Probenträgervorrichtung (15) und eine Haltevorrichtung (20) zur Halterung und Relativpositionierung der Mantelelektrode (13, 41) und der Verschlusselektrode (12) aufweist.

## Claims

1. A shell electrode (13, 41) for an electrode device (11) of an atomizing furnace (10), in particular for atomic absorption spectrometry, the electrode device being composed of the shell electrode and a closure electrode (12), the shell electrode and the closure electrode serving to receive and establish electrical contact with a sample holder device (15) of the atomizing furnace, the shell electrode and the closure electrode being supportable on a support device (20) of the atomizing furnace and being positionable relative to each other, the shell electrode having a window (25, 44) which is formed in the shell electrode so as to be aligned with a receiving tube (16) of the sample holder device, the receiving tube (16) serving to receive an analyte, the window being formed in the shell electrode so as to extend between parallel lateral surfaces (35, 47) at the longitudinal ends of the shell electrode, the shell electrode being insertable into a receiving mount (21) of the support device in such a manner that the parallel lateral surfaces are in contact with parallel receiving surfaces (37) of the receiving mount,
the shell electrode having a clamping device (38, 48) for generating a clamping force acting on the receiving surfaces,
**characterized in that**
the clamping device is formed by a wedge (39, 49) which forms at least partially one lateral surface of the two lateral surfaces and which is in contact with an inclined plane (40, 50) of the shell electrode, the wedge forming the window at least sectionally.

2. The shell electrode according to claim 1,
**characterized in that**
the shell electrode (13, 41) is insertable into the receiving mount (21) of the support device (20) in a direction perpendicular to a longitudinal axis (24, 43) of the shell electrode.

3. The shell electrode according to claim 1 or 2,
**characterized in that**
the window (25, 44) in the shell electrode extends along a longitudinal axis (24, 43) of the shell electrode (13, 41) and is aligned with window holes (26) formed in the receiving mount (21).

4. The shell electrode according to any one of the preceding claims,
**characterized in that**
the wedge (39, 49) is provided with a through hole, preferably an oblong hole (52), which is aligned with the window (25, 44).

5. The shell electrode according to any one of the preceding claims,
**characterized in that**
the wedge (39, 49) is insertable into a gap between the receiving surface (37) of the receiving mount (21) and the inclined plane (40, 50) in such a manner that the window (25, 44) is in gas-tight contact with a window hole (26) of the receiving mount, the window hole (26) being aligned with the window.

6. The shell electrode according to any one of the preceding claims,
**characterized in that**
a groove (51) (guide) having the inclined plane (40, 50) is formed in the one lateral surface (35, 47) of the shell electrode (13, 41).

7. The shell electrode according to any one of the preceding claims,
**characterized in that**
the shell electrode (13, 41) has a clamping device (38, 48) at the two longitudinal ends.

8. The shell electrode according to any one of the preceding claims,
**characterized in that**
the shell electrode (13, 41) has an injection opening (29) which is formed in the shell electrode so as to extend along a transverse axis (30) of the shell electrode and to be aligned with an injection channel (31) formed in the receiving mount (21) for injecting inert gas, the injection opening ending in a receiving opening (14) formed in the shell electrode for receiving the sample holder device (15).

9. The shell electrode according to claim 8,
**characterized in that**
at an underside (32, 53) of the shell electrode (13, 41), the injection opening (29) is provided with a socket (33, 54) or a fitting which is connectable to a matching fitting (34) or socket of the injection channel (31) of the receiving mount (21).

10. The shell electrode according to claim 9,
**characterized in that**
the socket (34, 54) is realized as an oblong hole (55) extending along a longitudinal axis (24, 43) of the shell electrode (13, 41).

11. The shell electrode according to any one of the preceding claims,
**characterized in that**
the shell electrode (13, 41), the closure electrode (12) and/or the sample holder device (15) is/are made of graphite.

12. The shell electrode according to any one of the preceding claims,
**characterized in that**
the shell electrode (13, 41), the closure electrode (12) and/or the sample holder device (15) is/are coated with pyrolytic carbon.

13. The shell electrode according to any one of the preceding claims,
**characterized in that**
the receiving mount (21) is made of metal and is coated with pyrolytic carbon.

14. The shell electrode according to any one of the preceding claims,
**characterized in that**
the sample holder device (15) has a receiving tube (16) which forms a tubular receiving chamber (17) for receiving the analyte.

15. An analyzer (19), in particular for atomic absorption spectrometry, comprising an atomizing furnace (10),
**characterized in that**
the atomizing furnace has an electrode device (11) comprising a closure electrode (12) and a shell electrode (13, 41) according to any one of the preceding claims.

16. The analyzer according to claim 15,
**characterized in that**
the analyzer (19) has a sample holder device (15) and a support device (20) for supporting the shell electrode (13, 41) and the closure electrode (12) and positioning them relative to each other.

## Revendications

1. Électrode d'enveloppe (13, 41) pour un dispositif d'électrodes (11) d'un four d'atomisation (10), notamment pour la spectrométrie d'absorption atomique, le dispositif d'électrodes étant composé de l'électrode d'enveloppe et d'une électrode de fermeture (12), l'électrode d'enveloppe et l'électrode de fermeture servant à recevoir et à établir un contact électrique avec un dispositif (15) de porte-échantillon du four d'atomisation, l'électrode d'enveloppe et l'électrode de fermeture pouvant être retenues sur un dispositif de retenue (20) du four d'atomisation et pouvant être positionnées l'une par rapport à l'autre, l'électrode d'enveloppe ayant une fenêtre (25, 44) qui est formée dans l'électrode d'enveloppe de manière à être alignée avec un tube de réception (16) du dispositif de porte-échantillon, le tube de réception (16) servant à recevoir un analyte, la fenêtre étant formée dans l'électrode d'enveloppe de manière à s'étendre entre des surfaces latérales (35, 47) parallèles aux extrémités longitudinales de l'électrode d'enveloppe, l'électrode d'enveloppe étant insérable dans un support de réception (21) du dispositif de retenue de manière que les surfaces latérales parallèles sont en contact avec des surfaces de réception (37) parallèles du support de réception, l'électrode d'enveloppe ayant un moyen de serrage (38, 48) pour générer une force de serrage agissant sur les surfaces de réception,
**caractérisée en ce que**
le moyen de serrage est formé par une clavette (39, 49) qui forme au moins partiellement une surface latérale des deux surfaces latérales et qui est en contact avec un plan incliné (40, 50) de l'électrode d'enveloppe, la clavette formant la fenêtre au moins par sections.

2. Électrode d'enveloppe selon la revendication 1,
**caractérisée en ce que**
l'électrode d'enveloppe (13, 41) est insérable dans le support de réception (21) du dispositif de retenue (20) dans une direction perpendiculaire à un axe longitudinal (24, 43) de l'électrode d'enveloppe.

3. Électrode d'enveloppe selon la revendication 1 ou 2,
**caractérisée en ce que**
la fenêtre (25, 44) dans l'électrode d'enveloppe s'étend le long d'un axe longitudinal (24, 43) de l'électrode d'enveloppe (13, 41) et est alignée avec des trous de fenêtre (26) formés dans le support de réception (21).

4. Électrode d'enveloppe selon l'une quelconque des revendications précédentes,
**caractérisée en ce que**
la clavette (39, 49) est pourvue d'un trou traversant, de préférence d'un trou oblong (52), qui est aligné avec la fenêtre (25, 44).

5. Électrode d'enveloppe selon l'une quelconque des revendications précédentes,
**caractérisée en ce que**
la clavette (39, 49) est insérable dans un interstice entre la surface de réception (37) du support de réception (21) et le plan incliné (40, 50) de manière que la fenêtre (25, 44) est en contact étanche au gaz avec un trou de fenêtre (26) du support de réception, le trou de fenêtre (26) étant aligné avec la fenêtre.

6. Électrode d'enveloppe selon l'une quelconque des revendications précédentes,
**caractérisée en ce**
**qu'**une rainure (51) (un guidage) ayant un plan incliné (40, 50) est formée dans l'une surface latérale (35, 47) de l'électrode d'enveloppe (13, 41).

7. Électrode d'enveloppe selon l'une quelconque des revendications précédentes,
**caractérisée en ce que**
l'électrode d'enveloppe (13, 41) a un moyen de serrage (38, 48) aux deux extrémités longitudinales.

8. Électrode d'enveloppe selon l'une quelconque des revendications précédentes,
**caractérisée en ce que**
l'électrode d'enveloppe (13, 41) a une ouverture d'injection (29) qui est formée dans l'électrode d'enveloppe de manière à s'étendre le long d'un axe transversal (30) de l'électrode d'enveloppe et à être alignée avec un canal d'injection (31) formé dans le support de réception (21) pour l'injection de gaz inerte, l'ouverture d'injection se terminant dans une ouverture de réception (14) formée dans l'électrode d'enveloppe pour la réception du dispositif (15) de porte-échantillon.

9. Électrode d'enveloppe selon la revendication 8,
**caractérisée en ce que**
sur une face inférieure (32, 53) de l'électrode d'enveloppe (13, 41), l'ouverture d'injection (29) est pourvue d'un embout femelle (33, 54) ou d'un embout mâle qui peut être relié à un embout mâle (34) ou un embout femelle formé de manière correspondante du canal d'injection (31) du support de réception (21).

10. Électrode d'enveloppe selon la revendication 9,
**caractérisée en ce que**
l'embout femelle (34, 54) est réalisé comme trou oblong (55) qui s'étend le long d'un axe longitudinal (24, 43) de l'électrode d'enveloppe (13, 41).

11. Électrode d'enveloppe selon l'une quelconque des revendications précédentes,
**caractérisée en ce que**
l'électrode d'enveloppe (13, 41), l'électrode de fermeture (12) et/ou le dispositif de porte-échantillon (15) est/sont en graphite.

12. Électrode d'enveloppe selon l'une quelconque des revendications précédentes,
**caractérisée en ce que**
l'électrode d'enveloppe (13, 41), l'électrode de fermeture (12) et/ou le dispositif de porte-échantillon (15) est/sont revêtus de carbone pyrolytique.

13. Électrode d'enveloppe selon l'une quelconque des revendications précédentes,
**caractérisée en ce que**
le support de réception (21) est en métal et revêtu de carbone pyrolytique.

14. Électrode d'enveloppe selon l'une quelconque des revendications précédentes,
**caractérisée en ce que**
le dispositif de porte-échantillon (15) a un tube de réception (16) qui forme un espace de réception (17) de forme tubulaire pour la réception de l'analyte.

15. Analyseur (19), notamment pour la spectrométrie d'absorption atomique, comprenant un four d'atomisation (10),
**caractérisé en ce que**
le four d'atomisation a un dispositif d'électrodes (11) ayant une électrode de fermeture (12) et une électrode d'enveloppe (13, 41) selon l'une quelconque des revendications précédentes.

16. Analyseur selon la revendication 15,
**caractérisé en ce que**
l'analyseur (19) a un dispositif (15) de porte-échantillon et un dispositif de retenue (20) pour retenir l'électrode d'enveloppe (13, 41) et l'électrode de fermeture (12) et pour les positionner l'une par rapport à l'autre.
